# EUROPÄISCHE PATENTSCHRIFT

(11) **EP 3 451 841 B1**
(45) Veröffentlichungstag und Bekanntmachung des Hinweises auf die Patenterteilung: **04.12.2024**
(21) Anmeldenummer: 17733345.7
(22) Anmeldetag: 08.05.2017
(51) Int. Cl.: A22B 5/16, A22C 17/12, F16P 3/12

(54) **VORRICHTUNG UND VERFAHREN ZUR SICHERHEITSTECHNISCHEN STEUERUNG EINER MASCHINE**
DEVICE AND METHOD FOR SAFE TECHNICAL CONTROL OF A MACHINE
DISPOSITIF ET PROCÉDÉ POUR LA COMMANDE DE SÉCURITÉ TECHNIQUE D'UNE MACHINE

(30) Priorität: 06.05.2016 DE 102016207861
(43) Veröffentlichungstag der Anmeldung: 13.03.2019
(73) Patentinhaber: MAJA-Maschinenfabrik Hermann Schill GmbH, 77694 Kehl (DE)
(72) Erfinder: SCHILL, Joachim, 77694 Kehl (DE)
(74) Vertreter: Geitz Patentanwälte PartG mbB
(86) Internationale Anmeldenummer: PCT/DE2017/100391
(87) Internationale Veröffentlichungsnummer: WO 2017/190742

(56) Entgegenhaltungen:
- EP-A2- 0 362 937
- EP-A2- 0 445 860
- US-A- 5 272 946

## Beschreibung

Die Erfindung geht aus von einer Vorrichtung und einem Verfahren zur sicherheitstechnischen Steuerung einer Maschine, wobei die Maschine mit einem elektrischen Antrieb ausgestattet ist, von einer Person bedient wird und ein Bauteil aus Metall aufweist, das bei einer mechanischen Wechselwirkung mit der Person diese verletzt.

Bei Maschinen, die von einer Person bedient werden und welche ein Werkzeug oder sonstiges Bauteil aufweisen, mit dem die Person bei der Bedienung der Maschine in Kontakt treten kann, besteht grundsätzlich die Gefahr, dass sich die Person verletzt. Dies gilt insbesondere dann, wenn die Person mit der Maschine einen Gegenstand bearbeitet, der von Hand an die Maschine heranführt und bei der Bearbeitung von Hand relativ zu einem Werkzeug der Maschine bewegt wird. Dabei können die Hände der Person mit dem Werkzeug in Kontakt treten und verletzt werden. Zur Reduzierung der Verletzungsgefahr können Handschuhe getragen werden. Durch die Verwendung von Handschuhen kann die Gefahr von Verletzungen zwar reduziert werden, jedoch können Verletzungen nicht vollständig vermieden werden.

Zu derartigen Maschinen zählen beispielweise Abschwartungs- und Enthäutungsmaschinen, mit denen die Haut oder die Schwarte von Fleischstücken mittels eines Messers entfernt wird, sowie Entvliesmaschinen. Derartige Maschinen sind mit einer Walze ausgestattet, die durch einen elektrischen Antrieb in Rotation versetzt wird. Die rotierende Walze zieht ein Fleischstück an ein ortsfest an der Maschine angeordnetes Messer heran und bewegt das Fleischstück relativ zu diesem Messer. Ist das Fleischstück rund oder unregelmäßig geformt, so muss es von einer Person während des Abschwartens und Enthäutens geführt werden. Dabei kann sich die Person an dem Messer verletzen. Zusätzlich besteht die Gefahr, dass die Walze die Hand der Person erfasst und gegen das Messer drückt.

Die Personen können bei der Arbeit an der Maschine Handschuhe tragen, die aus einem elektrisch leitfähigen Unterhandschuh und einem elektrisch isolierenden Überhandschuh bestehen. Wird der isolierende Überhandschuh durch die Arbeit an der Maschine beschädigt, beispielsweise durch ein Werkzeug der Maschine eingeschnitten, so hat der elektrisch leitfähige Unterhandschuh elektrischen Kontakt zu einem metallischen Bauteil der Maschine. Dieser Kontakt kann detektiert und der Antrieb der Maschine abgeschaltet werden. Als nachteilig erweist sich, dass die Person die Handschuhe nicht zwingend tragen muss.

Die EP 0 362 937 A2 offenbart ein Sicherheitssystem für Geräte mit Motorantrieb, einem durch den Motor angetriebenen Metallteil und eine Schalteinrichtung zum Betrieb des Elektromotors, insbesondere Fleischenthäutungsmaschinen und in der Hand zu haltende Fleischschneidmesser. Das Sicherheitssystem umfasst elektrisch leitende Handschuhe und eine Sicherheitsschalteinrichtung, welche Teil der Schalteinrichtung ist. Wenn einer der leitenden Handschuhe das durch den Motor angetriebene Metallteil berührt, sorgt die Sicherheitsschalteinrichtung dafür, dass die Drehrichtung des Motors und die Drehrichtung des Metallteils umgedreht werden. Über den leitenden Handschuhen werden von der Bedienperson nicht leitende Handschuhe getragen. Bevor die Maschine in Betrieb gesetzt werden kann, muss der Körperwiderstand erfasst sein. Aus der Erfassung des Körperwiderstandes wird geschlossen, dass die Bedienperson die leidenden Handschuhe an den Händen trägt.

Die US 5 272 946 A offenbart ein Sicherheitssystem für angetriebene Vorrichtungen, bei dem die Drehrichtung einer zur Rotation angetriebenen Komponente sofort nach Eintreten eines Störfalles mit Hilfe eines druckbetätigten Kolbens umgekehrt wird. Eine Steuerungseinrichtung überprüft, ob ein Bearbeiter elektrisch leitende Handschuhe trägt, indem der Widerstand zwischen den elektrisch leitenden Handschuhen gemessen wird. Die Anwesenheit eines Bearbeiters wird mit Hilfe eines Fußpedals erfasst. Wird das Fußpedal gedrückt, so wird überprüft, ob über die Handschuhe oder die Schuhe des Bearbeiters Strom abfließt.

Als nachteilig erweist sich bei derartigen Vorrichtungen und Verfahren, dass nicht in zuverlässiger Weise nachgewiesen werden kann, ob eine Person die elektrisch leitenden Handschuhe trägt, da der Körperwiderstand von Person zu Person unterschiedlich ist.

Die EP 0 445 860 A2 offenbart eine Steuerungs- und Sicherheitsanordnung für elektrisch betriebene Maschinen, welche mit einem Messer ausgestattet sind, insbesondere Maschinen zur Bearbeitung von Fleisch. Das System weist ein Paar elektrisch leitende Handschuhen für eine Bedienperson und einen Behälter auf, den die Bedienperson am Körper trägt. In dem Behälter sind eine aufladbare Batterie und ein elektrischer Schaltkreis angeordnet. Der Schaltkreis umfasst einen Sensor und einen Sender, der ein Lichtsignal aussendet, wenn eine Bedienperson die Handschuhe trägt. Das Lichtsignal wird unterbrochen, wenn die Bedienperson ein Metallteil der Maschine mit einem der Handschuhe berührt.

Der Erfindung liegt die Aufgabe zugrunde, eine Vorrichtung und ein Verfahren zur sicherheitstechnischen Steuerung einer derartigen Maschine zur Verfügung zu stellen, die das Einschalten des Antriebs der Maschine nur dann ermöglichen, wenn die Person elektrisch leitfähige Handschuhe trägt und die Handschuhe in einer vorgegebenen Weise elektrisch leitend mit einer Steuerungseinrichtung verbunden sind.

Diese Aufgabe wird durch eine Vorrichtung gemäß Anspruch 1 und ein Verfahren gemäß Anspruch 12 gelöst. Die Vorrichtung zeichnet sich dadurch aus, dass sie mit einem linken und einem rechten leitfähigen Handschuh, einem linken und einem rechten isolierenden Handschuh, einer Steuerungseinrichtung, einer elektrisch leitenden Verbindung zwischen dem linken leitfähigen Handschuh und der Steuerungseinrichtung, einer elektrisch leitenden Verbindung zwischen dem rechten leitfähigen Handschuh und der Steuerungseinrichtung und mit einer Widerstandsprüfeinrichtung der Steuerungseinrichtung ausgestattet ist.

Dabei leiten der linke und der rechte leitfähige Handschuh den elektrischen Strom. Sie sind von einer Person, die die Maschine betätigt und die an der Maschine arbeitet, derart zu tragen, dass die Handschuhe die Haut der Person an den Händen berühren. Die elektrisch leitfähigen Handschuhe können auch als Unterhandschuhe bezeichnet werden.

Über den elektrisch leitfähigen Handschuhen hat die Person einen linken und einen rechten isolierenden Handschuh zu tragen. Die isolierenden Handschuhe bestehen aus einem elektrischen Isolator. Die isolierenden Handschuhe können auch als Überhandschuhe bezeichnet werden.

Die Schutzhandschuhe weisen damit eine Kombination aus einem Paar elektrisch leitfähigen Unterhandschuhen und einem Paar isolierenden Überhandschuhen auf.

Die Steuerungseinrichtung steuert den elektrischen Antrieb. Über elektrisch leitende Verbindungen werden die elektrisch leitfähigen Handschuhe an die Steuerungseinrichtung angeschlossen. Dabei ist jeder der beiden elektrisch leitfähigen Handschuhe über eine separate Verbindung an die Steuerungseinrichtung gekoppelt. Für den linken leitfähigen Handschuh ist eine linke elektrisch leitende Verbindung vorgesehen und für den rechten leitfähigen Handschuh eine rechte leitende Verbindung. Die Steuerungseinrichtung ist mit einer Spannungsquelle ausgestattet, an welche der linke und rechte leitfähige Handschuh angeschlossen werden. Trägt die Person den linken und rechten leitfähigen Handschuh derart, dass die Handschuhe die Hände der Person umschließen und die Handschuhe auf der Haut der Person aufliegen, so fließt ein Strom von der Steuerungseinrichtung zum linken leitfähigen Handschuh, durch die Person hindurch zum rechten leitfähigen Handschuh und von dort zurück zur Steuerungseinrichtung. Die Richtung des Stroms kann auch umgekehrt sein. Die Spannung wird so gewählt, dass der Strom klein ist und beispielsweise im Mikro-Ampere-Bereich liegt, so dass die Person durch den Strom nicht beeinträchtigt ist.

Wenn die Person über den elektrisch leitfähigen Handschuhen die isolierenden Handschuhe trägt und mit den derart behandschuhten Händen die Maschine berührt, insbesondere auch ein metallisches Bauteil der Maschine, so fließt kein Strom von den leitfähigen Handschuhen zu dem metallischen Bauteil, da die isolierenden Handschuhe einen Stromfluss verhindern. Der Stromfluss vom linken zum rechten leitfähigen Handschuh über den Körper der Person wird durch die isolierenden Handschuhe nicht beeinträchtigt oder unterbunden.

Die Steuerungseinrichtung weist einen Betriebszustand auf, in welchem sie den elektrischen Antrieb mit Strom versorgt und die Spannung zwischen dem rechten leitfähigen Handschuh und dem linken leitfähigen Handschuh überwacht. Ändert sich in diesem Betriebszustand der Spannungsabfall über den linken oder den rechten leitfähigen Handschuh, so schaltet die Steuerungseinrichtung den elektrischen Antrieb aus oder kehrt die Bewegungsrichtung des elektrischen Antriebs um. Ein derartiger Spannungsabfall tritt auf, wenn ein Strom von dem linken oder rechten leitfähigen Handschuh zu einem metallischen Bauteil der Maschine fließt. Es wird daher davon ausgegangen, dass bei einem Spannungsabfall über den linken oder rechten leitfähigen Handschuh eine Beschädigung des linken oder rechten isolierenden Handschuhs vorliegt. Dies kann insbesondere dadurch ausgelöst sein, dass die Person mit einem Werkzeug oder einem Bauteil der Maschine in Wechselwirkung geraten ist und dass eine Verletzungsgefahr besteht. Daher schaltet die Steuerungseinrichtung den Antrieb der Maschine ab. Alternativ oder kumulativ kann die Steuerungseinrichtung die Bewegungsrichtung des Antriebs umkehren. Dies gilt beispielsweise bei Maschinen mit zur Rotation angetriebenen Walzen. Die Umkehr der Bewegungsrichtung des Antriebs bewirkt, dass ein gegebenenfalls in die Walze hineingezogener Abschnitt der Handschuhe frei gegeben wird.

Bevor die Steuerungseinrichtung den Betriebszustand aktiviert, wird in einer Startphase mittels einer Widerstandsprüfeinrichtung der Steuerungseinrichtung der Widerstand zwischen dem linken leitfähigen, mit der Steuerungseinrichtung leitend verbundenen Handschuh und dem rechten leitfähigen, mit der Steuerungseinrichtung leitend verbundenen Handschuh erfasst und mit einem vorgegebenen Mindestwiderstand und einem vorgegebenen Maximalwiderstand verglichen. Dabei ist der Mindestwiderstand größer als 0 Ω und kleiner als der typische Körperwiderstand einer Person. Der Körperwiderstand einer Person ist derjenige Widerstand, der wirkt, wenn bei einer an den Körper der Person angelegten Spannung ein elektrischer Strom durch den Körper der Person fließt. Dieser Körperwiderstand liegt üblicherweise im Bereich zwischen 17 und 30 kΩ. Er ist von Person zu Person verschieden und kann auch unterhalb oder oberhalb des genannten Bereichs liegen.

Ist der mit der Widerstandsprüfeinrichtung ermittelte Widerstand zwischen dem linken leitfähigen, mit der Steuerungseinrichtung leitend verbundenen Handschuh und dem rechten leitfähigen, mit der Steuerungseinrichtung leitend verbundenen Handschuh kleiner als der Mindestwiderstand, so kann daraus geschlossen werden, dass eine der folgenden Ursachen gegeben ist:
- die beiden elektrisch leitfähigen Handschuhe berühren sich, so dass ein elektrischer Kontakt zwischen den beiden Handschuhen besteht und ein Strom direkt von einem leitfähigen Handschuh zum anderen fließt ohne dabei durch den Körper der Person geleitet zu werden, beispielsweise weil die Person die leitfähigen Handschuhe aufeinander gelegt hat ohne sie an den Händen zu tragen,
- die Anschlüsse der elektrisch leitenden Verbindungen zwischen den leitfähigen Handschuhen und der Steuerungseinrichtung sind überbrückt,
- es liegt ein Querschluss oder Kurzschluss zwischen den elektrisch leitenden Verbindungen der leitfähigen Handschuhe vor.

Aus der Tatsache, dass der Widerstand zwischen dem linken leitfähigen Handschuh und dem rechten leitfähigen Handschuh kleiner ist als der Mindestwiderstand, wird geschlossen, dass die Person entweder die leitfähigen Handschuhe nicht in der vorgegebenen Art und Weise trägt oder die elektrisch leitende Verbindung zwischen den leitfähigen Handschuhen und der Steuerungseinrichtung beeinträchtigt ist.

Der Maximalwiderstand wird derart vorgegeben, dass er deutlich größer ist der typische Körperwiderstand. Ist der mit der Widerstandsprüfeinrichtung ermittelte Widerstand zwischen dem linken leitfähigen, mit der Steuerungseinrichtung leitend verbundenen Handschuh und dem rechten leitfähigen, mit der Steuerungseinrichtung leitend verbundenen Handschuh größer als der vorgegebene Maximalwiderstand, so kann daraus geschlossen werden, dass eine der folgenden Ursachen gegeben ist:
- die elektrisch leitfähigen Handschuhe werden von der Person nicht getragen,
- die elektrisch leitende Verbindung zwischen dem linken leitfähigen Handschuh und der Steuerungseinrichtung und/ oder zwischen dem rechten leitfähigen Handschuh und der Steuerungseinrichtung ist unterbrochen, beispielsweise aufgrund eines Kabelbruchs oder weil zumindest einer der beiden leitfähigen Handschuhe nicht korrekt an die Steuerungseinrichtung angeschlossen ist.

Aus der Tatsche, dass der Widerstand zwischen dem linken leitfähigen Widerstand und dem rechten leitfähigen Widerstand größer ist als der vorgegebene Maximalwiderstand wird geschlossen, dass die Person entweder die leitfähigen Handschuhe nicht trägt oder die elektrisch leitende Verbindung zwischen den leitfähigen Handschuhen und der Steuerungseinrichtung unterbrochen ist.

Wird daher festgestellt, dass der Widerstand zwischen dem linken leitfähigen Handschuh und dem rechten leitfähigen Handschuh kleiner ist als der vorgegebene Mindestwiderstand oder größer als der vorgegeben Maximalwiderstand, so wird aus Sicherheitsgründen verhindert, dass die Steuerungseinrichtung in den Betriebszustand übergeht. Der Antrieb der Maschine kann nicht eingeschaltet werden. Die Person kann die Überprüfung erneut durchführen. Erst wenn der Widerstand zwischen dem linken und rechten leitfähigen Handschuh zwischen dem Mindestwiderstand und dem Maximalwiderstand liegt, wird der Betriebszustand aktiviert und das Einschalten des Antriebs ermöglicht.

Die Überprüfung des Widerstands zwischen dem linken und rechten leitfähigen Handschuh wird nicht nur vor der Aktivierung des Betriebszustands durchgeführt sondern auch vorteilhafterweise während sich die Steuerungseinrichtung im Betriebszustand befindet und der Antrieb mit Strom versorgt wird. Eine entsprechende Überprüfung kann beispielsweise periodisch jeweils nach Ablauf eines vorgegebenen Zeitintervalls erfolgen. Wird während des Betriebszustands festgestellt, dass der Widerstand außerhalb des Intervalls liegt, das durch den Mindestwiderstand und den Maximalwiderstand vorgegeben ist, so unterbricht die Steuerungseinrichtung die Stromzufuhr des Antriebs. Der Antrieb schaltet ab, der Betriebszustand wird beendet. Eine Aktivierung des Betriebszustands ist erst dann wieder möglich, wenn der Widerstand zwischen dem linken und rechten leitfähigen Handschuh innerhalb des vorgegebenen Intervalls liegt.

Die erfindungsgemäße Vorrichtung und das erfindungsgemäße Verfahren lösen damit die Aufgabe, dass der Antrieb der Maschine nur dann eingeschaltet werden kann, wenn die Person die elektrisch leitfähigen Handschuhe in der vorgegebenen Weise an den Händen trägt und die elektrisch leitende Verbindung zwischen den elektrisch leitfähigen Handschuhen und der Steuerungseinrichtung in der vorgegebenen Weise gewährleistet ist.

Nach einer vorteilhaften Ausgestaltung der Erfindung weist die Widerstandsprüfeinrichtung der Steuerungseinrichtung zusätzlich zu der Überprüfung des Widerstandes zwischen dem linken und rechten leitfähigen Handschuh eine Handschuhprüffunktion auf. Dabei wird überprüft, ob die elektrische Leitfähigkeit der elektrisch leitfähigen Handschuhe in der vorgegebenen und notwendigen Weise gegeben ist. Hierzu wird ein sogenannter Handschuh-Maximalwiderstand vorgegeben. Dieser Handschuh-Maximalwiderstand wird derart vorgegeben, dass er größer ist als der Widerstand zwischen einem elektrisch leitfähigen linken oder rechten Handschuh und einem metallischen Bauteil der Maschine, wenn der Handschuh mit vorgegebener und einwandfreier Leitfähigkeit ausgestattet ist, an die Steuerungseinrichtung angeschlossen ist und ein metallisches Bauteil berührt. Folgende Schritte werden durchgeführt bevor die Person die isolierenden Handschuhe anzieht und bevor die Steuerungseinrichtung den Betriebszustand aktiviert:
- Die Person wird durch die Steuerungseinrichtung aufgefordert, mit der linken Hand, welche mit dem linken leitfähigen Handschuh ausgestattet ist, wobei der linke leitfähige Handschuh an die Steuerungseinrichtung angeschlossen ist, ein metallisches Teil der Maschine zu berühren. Der Widerstand zwischen dem linken leitfähigen Handschuh und dem metallischen Teil wird mit dem vorgegebenen Handschuh-Maximalwiderstand verglichen.
- Die Person wird durch die Steuerungseinrichtung aufgefordert, mit der rechten Hand, welche mit dem rechten leitfähigen Handschuh ausgestattet ist, wobei der rechte leitfähige Handschuh an die Steuerungseinrichtung angeschlossen ist, ein metallisches Teil der Maschine zu berühren. Der Widerstand zwischen dem rechten leitfähigen Handschuh und dem metallischen Teil wird mit dem vorgegebenen Handschuh-Maximalwiderstand verglichen.

Liegt für einen der beiden Handschuhe oder für beide Handschuhe der Widerstand oberhalb des vorgegebenen Handschuh-Maximalwiderstands, so wird davon ausgegangen, dass die elektrische Leitfähigkeit eines oder beider Handschuhe nicht gewährleistet ist. Dies kann beispielsweise dann der Fall sein, wenn eine leitfähige Beschichtung der Handschuhe aufgrund häufigen Waschens oder nicht sachgemäßen Waschens beschädigt oder beeinträchtigt ist. Für den Fall dass bei einem oder bei beiden Handschuhen der Widerstand größer ist als ein vorgegebener Handschuh-Maximalwiderstand, verhindert die Steuerungseinrichtung die Aktivierung des Betriebszustands. Der Antrieb der Maschine kann nicht eingeschaltet werden.

Nach einer weiteren vorteilhaften Ausgestaltung der Erfindung ist die linke elektrisch leitende Verbindung zwischen dem linken leitfähigen Handschuhe und der Steuerungseinrichtung ein erstes Kabel mit einem ersten Stecker. Dabei ist der erste Stecker in eine erste Buchse der Steuerungseinrichtung einsteckbar. Ferner ist die rechte elektrisch leitende Verbindung ein zweites Kabel ist mit einem zweiten Stecker, welcher in eine zweite Buchse der Steuerungseinrichtung einsteckbar ist. Dabei ist der erste Stecker vom zweiten Stecker verschieden. Ferner ist die erste Buchse von der zweiten Buchse verschieden. Die Stecker und Buchsen können in Form und/ oder Größe verschieden sein. Dadurch wird erreicht, dass der erste Stecker nur in die erste Buchse einsteckbar ist, und der zweite Stecker nur in die zweite Buchse einsteckbar ist. Dies ermöglicht es, dass die Steuerungseinrichtung erkennt, an welchem leitfähigen Handschuh oder an welchem zugehörigen Anschluss gegebenenfalls eine Abweichung des Widerstands vom vorgegebenen Bereich vorliegt.

Nach einer weiteren vorteilhaften Ausgestaltung der Erfindung sind die linke elektrisch leitende Verbindung und der linke elektrisch leitfähige Handschuh mit den Komponenten eines Klettverschlusses ausgestattet, so dass der Handschuh über einen Klettverschluss an die elektrisch leitende Verbindung angeschlossen werden kann. Entsprechend sind die rechte elektrisch leitende Verbindung und der rechte elektrisch leitfähige Handschuh mit einem Klettverschluss ausgestattet, über den die rechte elektrisch leitende Verbindung an den rechten elektrisch leitfähigen Handschuh angeschlossen ist. Der Klettverschluss ermöglicht ein einfaches und schnelles Befestigen und Lösen der elektrisch leitenden Verbindungen mit den Handschuhen. Der Klettverschluss befindet sich bevorzugt auf dem für den Handrücken vorgesehenen Abschnitt der Handschuhe.

Die Steuerungseinrichtung ist mit einer Spannungsquelle ausgestattet, die den linken und rechten elektrisch leitfähigen Handschuh mit Gleichstrom versorgt.

Die Steuerungseinrichtung ist ausgebildet, den Gleichstrom zu takten, so dass abwechselnd der linke und der rechte elektrisch leitfähige Handschuh mit Strom versorgt ist. Dabei können sich die Zeitintervalle, in denen der rechte und linke Handschuh mit Strom versorgt werden, überlappen oder auch nicht. Bei einer Überlappung sind zu bestimmten Zeitabschnitten beide Handschuhe mit Strom versorgt und zu bestimmten Zeitabschnitten nur einer der beiden Handschuhe. Überlappen die Zeitintervalle nicht, so wird zu jedem Zeitpunkt nur einer der beiden Handschuhe mit Strom versorgt.

Nach einer weiteren vorteilhaften Ausgestaltung der Erfindung ist die Steuerungseinrichtung ausgebildet, den Gleichstrom zu takten, derart dass gleichzeitig der linke und der rechte elektrisch leitfähige Handschuh mit Strom versorgt sind.

Nach einer weiteren vorteilhaften Ausgestaltung der Erfindung ist die Steuerungseinrichtung mit einem Sicherheitstransformator ausgestattet. Der Sicherheitstransformator ist primärseitig mit einem Motorschutzschalter für den primärseitigen Kurzschluss und mit einem sekundärseitigen Überlastschutz ausgeführt.

Nach einer weiteren vorteilhaften Ausgestaltung der Erfindung ist die Steuerungseinrichtung redundant aufgebaut.

Nach einer weiteren vorteilhaften Ausgestaltung der Erfindung bestehen der linke und rechte elektrisch leitfähige Handschuh aus einer Kunstfaser und sind mit einer Beschichtung aus einem leitfähigen Metall versehen. Bei der Kunstfaser kann es sich beispielsweise um eine Polyamid-Faser handeln. Als Metall kann beispielsweise Silber vorgesehen sein.

Alternativ zu einer metallischen Beschichtung können in die Kunstfasern des Handschuhs bei der Herstellung auch Metallfäden eingebracht werden. Derartige Metallfaden-verstärkte Handschuhe erfüllen in einigen Ländern nicht die Voraussetzungen des Arbeitsschutzes. Bei Abschwartungs- und Enthäutungsmaschinen sind Metallfaden-verstärkte Handschuhe nach der EU Norm EN12355 nicht erlaubt.

Nach einer weiteren vorteilhaften Ausgestaltung der Erfindung ist die Steuerungseinrichtung mit einer optischen Anzeigeeinrichtung ausgestattet, auf der der Betriebszustand und/ oder von der Steuerungseinrichtung erfasste Fehler angezeigt sind. Damit wird die Person über eventuell festgestellte Fehler und die Art der Fehler informiert. Ferner erkennt die Person, ob die Steuerungseinrichtung den Betriebszustand aktiviert hat. Darüber hinaus kann die Anzeigeeinrichtung Anweisungen an die Person ausgeben, bestimmte Handlungen durchzuführen, wie beispielsweise den linken und rechten leitfähigen Handschuh anzuziehen, ein metallisches Bauteil der Maschine zu berühren oder die isolierenden Handschuhe anzuziehen.

Nach einer weiteren vorteilhaften Ausgestaltung der Erfindung umfasst die Vorrichtung Schuhe für die Person, wobei die Schuhe zumindest an ihrer Sohle mit einem elektrischen Isolator ausgestattet sind. Durch das Tragen dieser Schuhe ist gewährleistet, dass ein Strom, der von der Steuerungseinrichtung zu dem linken und rechten leitfähigen Handschuh und über die Haut in den Körper der Person fließt, nicht über die Schuhe der Person gegen Masse abfließen kann. Bei einem derartigen Stromfluss könnte die Überprüfung der Widerstände nicht wie oben angegeben durchgeführt werden.

Nach einer weiteren vorteilhaften Ausgestaltung der Erfindung umfasst die Vorrichtung eine Jacke für die Person, wobei die linke und die rechte elektrisch leitende Verbindung zumindest abschnittsweise in die Jacke integriert sind. Eine derartige Jacke erleichtert das Anschließen des linken und rechten leitfähigen Handschuhs an die Steuerungseinrichtung.

Das erfindungsgemäße Verfahren mit den Merkmalen des Anspruchs 12 zeichnet sich dadurch aus, dass folgende Verfahrensschritte durchgeführt werden, bevor der Betriebszustand der Steuerungseinrichtung aktiviert wird:
- Die Person wird aufgefordert, einen linken und einen rechten leitfähigen Handschuh derart anzuziehen, dass die Handschuhe die Haut der Person an den Händen berühren.
- Die Person wird aufgefordert den linken leitfähigen Handschuh an eine Steuerungseinrichtung anzuschließen, welche den elektrischen Antrieb der Maschine steuert.
- Die Person wird aufgefordert den rechten leitfähigen Handschuh an die Steuerungseinrichtung anzuschließen.
- Der Widerstand zwischen dem linken leitfähigen, mit der Steuerungseinrichtung leitend verbundenen Handschuh und dem rechten leitfähigen, mit der Steuerungseinrichtung leitend verbundenen Handschuh, wird erfasst und mit einem vorgegebenen Mindestwiderstand und einem vorgegebenen Maximalwiderstand verglichen,
- Der Betriebszustand wird nur dann durch die Steuerungseinrichtung aktiviert, wenn der erfasste Widerstand größer als der Mindestwiderstand und kleiner als der Maximalwiderstand ist.
- Ist die genannte Voraussetzung erfüllt, wird die Person aufgefordert, über die leitfähigen Handschuhe isolierende Handschuhe anzuziehen.
- In vorteilhafter Weise werden anschließend die Schaltschütze für den Antrieb der Maschine geprüft. Ist die Maschine beispielsweise mit einer zur Rotation angetriebenen Walze ausgestattet, so werden Vor- und Rücklauf der Walze überprüft. Die Walze wird nacheinander in die beiden verschiedenen Richtungen zur Rotation angetrieben. Erst dann ist die Maschine tatsächlich betriebsbereit. Anhand der Rotation der Walze erkennt die Person, dass die Vorrichtung betriebsbereit ist.
- Im Betriebszustand wird der elektrische Antrieb der Maschine mit Strom versorgt. Die Spannung zwischen dem rechten leitfähigen Handschuh und dem linken leitfähigen Handschuh wird überwacht. Erfolgt ein Spannungsabfall zwischen über den linken oder rechten leitfähigen Handschuh, so wird der elektrische Antrieb durch die Steuerungseinrichtung ausgeschaltet oder die Bewegungsrichtung des elektrischen Antriebs umgekehrt.

Nach einer weiteren vorteilhaften Ausgestaltung der Erfindung ist eine Abschwartungs- und Enthäutungsmaschine mit der erfindungsgemäßen Vorrichtung ausgestattet. Dadurch wird die Abschwartungs- und Enthäutungsmaschine sicherheitstechnisch gesteuert und überwacht.

Nach einer weiteren vorteilhaften Ausgestaltung der Erfindung ist eine Entvliesmaschine mit einer erfinderungsgemäßen Vorrichtung ausgestattet.

Nach einer weiteren vorteilhaften Ausgestaltung der Erfindung wird das erfindungsgemäße Verfahren zur sicherheitstechnischen Steuerung bei einer Abschwartungs- und Enthäutungsmaschine durchgeführt.

Nach einer weiteren vorteilhaften Ausgestaltung der Erfindung wird das erfindungsgemäße Verfahren zur sicherheitstechnischen Steuerung bei einer Entvliesmaschine durchgeführt.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung ist ein Ausführungsbeispiel der Erfindung dargestellt und folgenden näher beschrieben. Es zeigt:

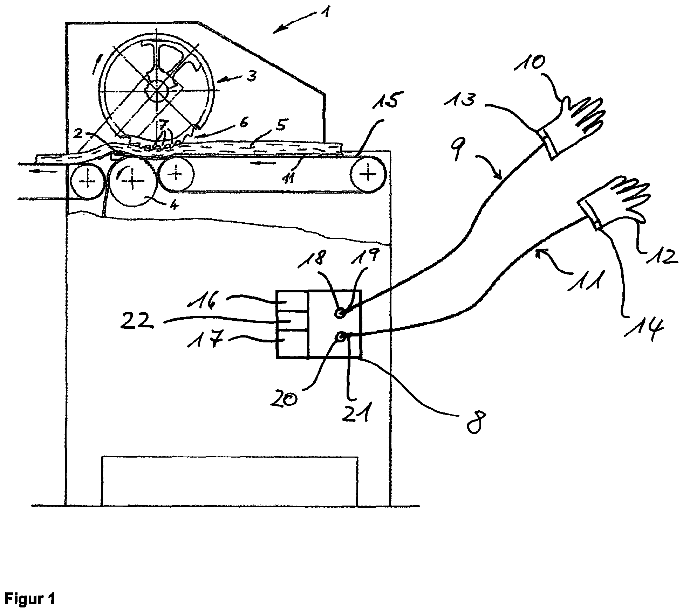

- Figur 1: Vorrichtung zur sicherheitstechnischen Steuerung einer mit einem Messer ausgestatteten Maschine.

### Beschreibung des Ausführungsbeispiels

In Figur 1 ist eine Vorrichtung zur sicherheitstechnischen Steuerung einer mit einem Messer 2 ausgestatteten Maschine 1 dargestellt. Die Maschine 1 weist neben dem Messer 2 aus Metall eine Andruckwalze 3 und eine Zugwalze 4 auf, welche ein zu bearbeitendes Fleischstück relativ zu dem Messer 2 bewegen. Das Messer schneidet von dem Fleischstück eine Schicht 11 ab. Diese Schicht befindet sich an der nach unten weisenden Seite, mit der das Fleischstück auf einem Transportband 15 aufliegt. Die Andruckwalze ist mit einer Profilierung 6 mit Zähnen 7 ausgestattet. Die Maschine ist mit einem in der Zeichnung nicht dargestellten elektrischen Antrieb ausgestattet, der die Zugwalze 4 zur Rotation antreibt. Durch die Rotation der Zugwalze 4 werden die Fleischstücke 5 über das Messer 2 gezogen. Bei der Maschine 1 kann es sich um eine Abschwartungs- und Enthäutungsmaschine oder um eine Entvliesmaschine handeln.

Die Vorrichtung zur sicherheitstechnischen Steuerung der Maschine 1 ist in die Maschine 1 integriert und mit einer Steuerungseinrichtung 8, einem linken Handschuh 10 und einem rechten Handschuh 12, einer linken elektrisch leitenden Verbindung 9 und einer rechten elektrisch leitenden Verbindung 11 ausgestattet. Die Steuerungseinrichtung 8 steuert den elektrischen Antrieb der Maschine 1. Der linke Handschuh 10 umfasst einen linken leitfähigen Handschuh und einen darüber zu tragenden isolierenden Handschuh. Entsprechend umfasst der rechte Handschuh 12 einen rechten leitfähigen Handschuh und einen darüber zu tragenden isolierenden Handschuh. Die linke elektrisch leitende Verbindung 9 verbindet den linken leitfähigen Handschuh mit der Steuerungseinrichtung 8. Die rechte elektrisch leitende Verbindung 11 verbindet den rechten leitfähigen Handschuh mit der Steuerungseinrichtung 8. Die Steuerungseinrichtung 8 ist mit einer Widerstandsprüfeinrichtung 16 und einer Spannungsquelle 17 ausgestattet. Die Widerstandsprüfeinrichtung 16 prüft den Widerstand zwischen dem linken leitfähigen Handschuh und dem rechten leitfähigen Handschuh. Die Spannungsquelle 17 versorgt den linken leitfähigen Handschuh und den rechten leitfähigen Handschuh mit Gleichstrom.

Die linke elektrisch leitfähige Verbindung 9 ist als erstes Kabel ausgebildet, das an seinem der Steuerungseinrichtung 8 zugewandten Ende mit einem Stecker ausgestattet ist. Dieser Stecker wird als erster Stecker 19 bezeichnet. Die Steuerungseinrichtung 8 weist eine erste Buchse 18 für den ersten Stecker 19 auf. Die rechte elektrisch leitfähige Verbindung 11 ist als zweites Kabel ausgebildet, das an seinem der Steuerungseinrichtung 8 zugewandten Ende mit einem Stecker ausgestattet ist. Dieser Stecker wird als zweiter Stecker 21 bezeichnet. Die Steuerungseinrichtung 8 weist eine zweite Buchse 20 für den zweiten Stecker 21 auf. Dabei unterscheidet sich der erste Stecker 19 vom zweiten Stecker 21. Ferner unterscheidet sich die erste Buchse 18 von der zweiten Buchse 20. Der erste Stecker 19 passt nur in die erste Buchse 18 und nicht in die zweite Buchse 20. Der zweite Stecker 21 passt nur in die zweite Buchse 20 und nicht in die erste Buchse 18.

Der linke elektrisch leitfähige Handschuh des linken Handschuhs 10 ist mit einem Klettverschluss 13 ausgestattet, über den die linke elektrisch leitfähige Verbindung 9 mit dem linken elektrisch leitenden Handschuh verbunden ist. Der rechte elektrisch leitfähige Handschuh des rechten Handschuhs 12 ist mit einem Klettverschluss 14 ausgestattet, über den die rechte elektrisch leitfähige Verbindung 11 mit dem linken elektrisch leitenden Handschuh verbunden ist.

Die Steuerungseinrichtung 8 ist ferner mit einer optischen Anzeigeeinrichtung 22 ausgestattet, welche der Betriebszustand der Steuerungseinrichtung 8 und eventuell festgestellte Fehler angezeigt werden.

Eine in der Zeichnung nicht dargestellte Person, welche Fleischstücke 5 auf das Transportband 15 auflegt, kann mit der Hand bis in den Bereich des Messers gelangen. Um die Person zu schützen, trägt diese einen linken und rechten Handschuh 10, 12 wie oben beschrieben. Anhand der Vorrichtung zur sicherheitstechnischen Steuerung der Maschine wird überwacht, ob die Person die Handschuhe trägt und ob die Vorrichtung korrekt funktionsfähig ist. Die Zugwalze 4 wird nur dann angetrieben, wenn die Vorrichtung zur sicherheitstechnischen Steuerung keine Fehler feststellt.

### Bezugszahlen

- 1: Maschine
- 2: Messer
- 3: Andruckwalze
- 4: Zugwalze
- 5: Fleischstück
- 6: Profilierung
- 7: Zähne
- 8: Steuerungseinrichtung
- 9: linke elektrisch leitende Verbindung
- 10: linker Handschuh
- 11: rechte elektrisch leitende Verbindung
- 12: rechter Handschuh
- 13: Klettverschluss
- 14: Klettverschluss
- 15: Transportband
- 16: Widerstandsprüfeinrichtung
- 17: Spannungsquelle
- 18: erste Buchse
- 19: erster Stecker
- 20: zweite Buchse
- 21: zweiter Stecker
- 22: optische Anzeigeeinrichtung

## Patentansprüche

1. Vorrichtung zur sicherheitstechnischen Steuerung einer Maschine, welche mit einem elektrischen Antrieb ausgestattet ist, welche von einer Person bedient wird, und welche mindestens ein Bauteil aus Metall aufweist, das bei einer mechanischen Wechselwirkung mit der Person diese verletzt, mit einem linken und rechten leitfähigen Handschuh (10, 12), welche den elektrischen Strom leiten, und welche von der Person derart zu tragen sind, dass die Handschuhe die Haut der Person an den Händen berühren, mit einem linken und rechten isolierenden Handschuh (10, 12), welche aus einem elektrischen Isolator bestehen, und welche von der Person über den leitfähigen Handschuhen zu tragen sind,
mit einer Steuerungseinrichtung (8), welche den elektrischen Antrieb der Maschine (1) steuert,
mit einer linken elektrisch leitenden Verbindung (9) zwischen dem linken leitfähigen Handschuh (10) und der Steuerungseinrichtung (8),
mit einer rechten elektrisch leitenden Verbindung (11) zwischen dem rechten leitfähigen Handschuh (12) und der Steuerungseinrichtung (8),
wobei die Steuerungseinrichtung (8) einen Betriebszustand aufweist, in welchem sie den elektrischen Antrieb mit Strom versorgt und die Spannung zwischen dem rechten leitfähigen Handschuh (12) und dem linken leitfähigen Handschuh (10) überwacht, und in welchem sie den elektrischen Antrieb ausschaltet oder die Bewegungsrichtung des elektrischen Antriebs umkehrt, wenn sich der Spannungsabfall über den linken und/ oder rechten leitfähigen Handschuh (10, 12) ändert,
**dadurch gekennzeichnet,**
**dass** die Steuerungseinrichtung (8) mit einer Widerstandsprüfeinrichtung (16) ist, welche den Widerstand zwischen dem linken leitfähigen, mit der Steuerungseinrichtung (8) leitend verbundenen Handschuh (10) und dem rechten leitfähigen, mit der Steuerungseinrichtung (8) leitend verbundenen Handschuh (12) erfasst und mit einem vorgegebenen Mindestwiderstand und einem vorgegebenen Maximalwiderstand vergleicht, wobei der Mindestwiderstand größer ist als 0 Ω und kleiner ist als der Körperwiderstand einer Person, und welche die Aktivierung des Betriebszustands verhindert oder bei bereits vorliegendem Betriebszustand diesen beendet, wenn der erfasste Widerstand kleiner als der Mindestwiderstand oder größer als der Maximalwiderstand ist,
**dass** die Steuerungseinrichtung (8) mit einer Spannungsquelle (17) ausgestattet ist, die den linken und rechten elektrisch leitfähigen Handschuh (10, 12) mit Gleichstrom versorgt
und **dass** die Steuerungseinrichtung (8) ausgebildet ist, den Gleichstrom zu takten, derart dass abwechselnd der linke und der rechte elektrisch leitfähige Handschuh (10, 12) mit Strom versorgt ist.

2. Vorrichtung nach Anspruch 1, **dadurch gekennzeichnet, dass** die Widerstandsprüfeinrichtung (16) der Steuerungseinrichtung (8) eine Handschuhprüffunktion aufweist,
- in welcher der Widerstand zwischen dem linken leitfähigen Handschuh (10) und einem metallischen Teil der Maschine (1) mit einem vorgegebenen Handschuh-Maximalwiderstand verglichen wird, wenn die Person den linken Handschuh trägt und mit der derart behandschuhten linken Hand das metallische Teil berührt,
- in welcher der Widerstand zwischen dem rechten leitfähigen Handschuh (12) und dem metallischen Teil der Maschine (1) mit dem vorgegebenen Handschuh-Maximalwiderstand verglichen wird, wenn die Person den rechten Handschuh trägt und mit der derart behandschuhten rechten Hand das metallische Teil berührt,
- und in welchem die Aktivierung des Betriebszustands verhindert wird, wenn bei einem oder bei beiden Handschuhen (10, 12) der Widerstand größer ist als der Handschuh-Maximalwiderstand.

3. Vorrichtung nach Anspruch 1 oder 2, **dadurch gekennzeichnet, dass** die linke elektrisch leitende Verbindung (9) ein erstes Kabel ist mit einem ersten Stecker (19), welcher in eine ersten Buchse (18) der Steuerungseinrichtung (8) einsteckbar ist, dass die rechte elektrisch leitende Verbindung (11) ein zweites Kabel ist mit einem zweiten Stecker (21), welcher in eine zweite Buchse (20) der Steuerungseinrichtung (8) einsteckbar ist, und dass der erste Stecker (19) vom zweiten Stecker (21) verschieden ist und die erste Buchse (18) von der zweiten Buchse (20) verschieden ist, derart, dass der erste Stecker (19) nur in die erste Buchse (18) einsteckbar ist und der zweite Stecker (21) nur in die zweite Buchse (20) einsteckbar ist.

4. Vorrichtung nach einem der vorhergehenden Ansprüche, **dadurch gekennzeichnet, dass** die linke elektrisch leitende Verbindung (9) und der linke elektrisch leitfähige Handschuh (10) mit einem Klettverschluss (13) ausgestattet sind, über den die linke elektrisch leitende Verbindung (9) an den linken elektrisch leitfähigen Handschuh (10) angeschlossen ist, und dass die rechte elektrisch leitende Verbindung (11) und der rechte elektrisch leitfähige Handschuh (12) mit einem Klettverschluss (14) ausgestattet sind, über den die rechte elektrisch leitende Verbindung (11) an den rechten elektrisch leitfähigen Handschuh (12) angeschlossen ist.

5. Vorrichtung nach Anspruch 1, **dadurch gekennzeichnet, dass** die Steuerungseinrichtung (8) ausgebildet ist, den Gleichstrom zu takten, derart dass gleichzeitig der linke und der rechte elektrisch leitfähige Handschuh (10, 12) mit Strom versorgt ist.

6. Vorrichtung nach einem der vorhergehenden Ansprüche, **dadurch gekennzeichnet, dass** die Steuerungseinrichtung (8) mit einem Sicherheitstransformator ausgestattet ist.

7. Vorrichtung nach einem der vorhergehenden Ansprüche, **dadurch gekennzeichnet, dass** die Steuerungseinrichtung (8) redundant aufgebaut ist.

8. Vorrichtung nach einem der vorhergehenden Ansprüche, **dadurch gekennzeichnet, dass** der linke und rechte elektrisch leitfähige Handschuh (10, 12) aus einer Kunstfaser bestehen und mit einer Beschichtung aus einem leitfähigen Metall versehen sind.

9. Vorrichtung nach einem der vorhergehenden Ansprüche, **dadurch gekennzeichnet, dass** die Steuerungseinrichtung (8) mit einer optischen Anzeigeeinrichtung (22) ausgestattet ist, auf der der Betriebszustand und/ oder von der Steuerungseinrichtung (8) erfasste Fehler angezeigt sind.

10. Vorrichtung nach einem der vorhergehenden Ansprüche, **dadurch gekennzeichnet, dass** sie Schuhe für die Person umfasst, und dass die Schuhe zumindest an ihrer Sohle mit einem elektrischen Isolator ausgestattet sind.

11. Vorrichtung nach einem der vorhergehenden Ansprüche, **dadurch gekennzeichnet, dass** sie eine Jacke für die Person umfasst, und dass die linke und die rechte elektrisch leitende Verbindung zumindest abschnittsweise in die Jacke integriert sind.

12. Verfahren zur sicherheitstechnischen Steuerung einer Maschine, welche mit einem elektrischen Antrieb ausgestattet ist, welche von einer Person bedient wird, und welche mindestens ein Bauteil aus Metall aufweist, das bei einer mechanischen Wechselwirkung mit der Person diese verletzt, mit folgenden Verfahrensschritten:
Ausstatten der Person mit einem linken und rechten leitfähigen Handschuh (10, 12), welche den elektrischen Strom leiten, und welche von der Person derart zu tragen sind, dass die Handschuhe die Haut der Person an den Händen berühren,
elektrisch leitendes Verbinden des linken leitfähigen Handschuhs (10) mit einer Steuerungseinrichtung (8), welche den elektrischen Antrieb der Maschine (1) steuert,
elektrisch leitendes Verbinden des rechten leitfähigen Handschuhs (12) mit der Steuerungseinrichtung (8),
Erfassen des Widerstands zwischen dem linken leitfähigen, mit der Steuerungseinrichtung (8) leitend verbundenen Handschuh (10) und dem rechten leitfähigen, mit der Steuerungseinrichtung (8) leitend verbundenen Handschuh (12),
Ausstatten der Person mit einem linken und rechten isolierenden Handschuh, welche aus einem elektrischen Isolator bestehen, und welche von der Person über den leitfähigen Handschuhen (10, 12) zu tragen sind vor dem Aktivieren des Betriebszustands,
im Betriebszustand Versorgen des elektrischen Antriebs mit Strom durch die Steuerungseinrichtung (8) und Überwachen der Spannung zwischen dem rechten leitfähigen Handschuh (12) und dem linken leitfähigen Handschuh (10) und Ausschalten des elektrischen Antriebs oder Umkehr der Bewegungsrichtung des elektrischen Antriebs, wenn sich der Spannungsabfall zwischen dem rechten leitfähigen Handschuh und dem linken leitfähigen Handschuh (10, 12) erfolgt
**dadurch gekennzeichnet,**
**dass** der erfasste Widerstand mit einem vorgegebenen Mindestwiderstand und einem vorgegebenen Maximalwiderstand verglichen wird, wobei der Mindestwiderstand größer ist als 0 Ω und kleiner ist als der Körperwiderstand einer Person,
**dass** der Betriebszustand nur dann aktiviert wird, wenn der erfasste Widerstand größer als der Mindestwiderstand oder kleiner als der Maximalwiderstand ist,
**dass** die Steuerungseinrichtung (8) über eine Spannungsquelle (17) den linken und rechten elektrisch leitfähigen Handschuh mit Gleichstrom versorgt und der Gleichstrom getaktet ist, derart dass abwechselnd der linke und der rechte elektrisch leitfähige Handschuh (10, 12) mit Gleichstrom versorgt werden.

13. Verfahren nach Anspruch 12, **dadurch gekennzeichnet, dass** vor der Aktivierung des Betriebszustands des elektrischen Antriebs mittels einer Widerstandsprüfeinrichtung (16) der Steuerungseinrichtung (8) eine Handschuhprüffunktion durchgeführt wird,
- in welcher der Widerstand zwischen dem linken leitfähigen Handschuh (10) und einem metallischen Teil der Maschine (1) mit einem vorgegebenen Handschuh-Maximalwiderstand verglichen wird, wenn die Person den linken Handschuh (10) trägt und mit der derart behandschuhten linken Hand das metallische Teil berührt,
- in welcher der Widerstand zwischen dem rechten leitfähigen Handschuh (12) und dem metallischen Teil der Maschine (1) mit dem vorgegebenen Handschuh-Maximalwiderstand verglichen wird, wenn die Person den rechten Handschuh (12) trägt und mit der derart behandschuhten rechten Hand das metallische Teil berührt,
- und in welchem die Aktivierung des Betriebszustands verhindert wird, wenn bei einem oder bei beiden Handschuhen (10, 12) der Widerstand größer ist als der Handschuh-Maximalwiderstand.

14. Verfahren nach Anspruch 12 oder 13, **dadurch gekennzeichnet, dass** im Betriebszustand bei eingeschaltetem Antrieb der Maschine (1) periodisch der Widerstand zwischen dem linken leitfähigen Handschuh (10) und dem rechten leitfähigen Handschuh (12) mit dem vorgegebenen Mindestwiderstand und dem vorgegebenen Maximalwiderstand verglichen wird, und dass der Betriebszustand beendet wird, wenn der Widerstand kleiner als der Mindestwiderstand oder größer als Maximalwiderstand ist.

15. Verfahren nach Anspruch 14, **dadurch gekennzeichnet, dass** bei Beendigung des Betriebszustands die Steuerungseinrichtung (8) die Stromzufuhr des elektrischen Antriebs unterbricht.

16. Verfahren nach Anspruch 12, **dadurch gekennzeichnet, dass** der Gleichstrom getaktet ist, derart dass gleichzeitig der linke und der rechte elektrisch leitfähige Handschuh (10, 12) mit Gleichstrom versorgt werden.

17. Verfahren nach einem der Ansprüche 12 bis 16, **dadurch gekennzeichnet, dass** der Betriebszustand und/ oder von der Steuerungseinrichtung (8) erfasste Fehler auf einer Anzeigeeinrichtung angezeigt werden.

18. Abschwartungs- und Enthäutungsmaschine mit einem Messer (2), einer Walze (4) und einem elektrischen Antrieb für die Walze (4), **dadurch gekennzeichnet, dass** sie mit einer Vorrichtung nach einem der Ansprüche 1 bis 11 ausgestattet ist.

19. Entvliesmaschine mit einem Messer (2), einer Walze (4) und einem elektrischen Antrieb für die Walze (4), **dadurch gekennzeichnet, dass** sie mit einer Vorrichtung nach einem der Ansprüche 1 bis 11 ausgestattet ist.

20. Verfahren zur sicherheitstechnischen Steuerung einer Abschwartungs- und Enthäutungsmaschine, **dadurch gekennzeichnet, dass** die Verfahrensschritte nach einem der Ansprüche 12 bis 17 durchgeführt werden.

21. Verfahren zur sicherheitstechnischen Steuerung einer Entvliesmaschine, **dadurch gekennzeichnet, dass** die Verfahrensschritte nach einem der Ansprüche 12 bis 17 durchgeführt werden.

## Claims

1. Device for safety instrumented control of a machine, which is provided with an electric drive, which is operated by a person and which has at least one metal component capable of causing injury in the event of a mechanical interaction with the person,
with a left-hand and a right-hand conductive glove (10, 12) which conduct electric current and which are to be worn by the person such that the gloves make contact with the skin of the person's hands,
with a left-hand and a right-hand insulating glove (10, 12) which comprise an electrical insulator and which are to be worn by the person over the conductive gloves,
with a control device (8) which controls the electrical drive of the machine (1),
with a left-hand electrically conducting connection (9) between the left-hand conductive glove (10) and the control device (8),
with a right-hand electrically conductive connection (11) between the right-hand conductive glove (12) and the control device (8),
wherein the control device (8) has an operating condition in which the control device supplies the electric drive with power and monitors a voltage between the right-hand conductive glove (12) and the left-hand conductive glove (10), and switches off the electric drive or reverses the direction of movement of the electric drive if the voltage between the left-hand and/ or the right-hand conductive glove (10, 12) changes, **characterized in**
**that** the control device (8) is provided with a resistance test device (16) which detects the resistance between the left-hand conductive glove (10) conductively connected to the control device (8) and the right-hand conductive glove (12) conductively connected to the control device (8) and compares it with a predetermined minimum resistance and a predetermined maximum resistance, wherein the minimum resistance is greater than 0 Ω and less than the body resistance of a person, and which prevents the activation of the operating condition or if the operating condition is already present terminates the operating condition if the resistance detected is less than the minimum resistance or greater than the maximum resistance,
**that** the control device (8) is provided with a voltage source (17) that supplies the left-hand and right-hand electrically conductive gloves (10, 12) with direct current,
and in that the control device (8) is designed to cycle the direct current to alternately supply the left-hand and right-hand conductive gloves (10, 12) with power.

2. Device according to claim 1, **characterized in that** the resistance test device (16) of the control device (8) has a glove test function,
- in which the resistance between the left-hand conductive glove (10) and a metallic part of the machine (1) is compared with a predetermined glove maximum resistance if the person is wearing the left-hand glove and uses this gloved left hand to make contact with the metallic part,
- in which the resistance between the right-hand conductive glove (12) and the metallic part of the machine (1) is compared with the predetermined glove maximum resistance if the person is wearing the right-hand glove and uses this gloved right hand to make contact with the metallic part,
- and in which the activation of the operating condition is prevented if the resistance of one or both gloves (10, 12) is greater than the glove maximum resistance.

3. Device according to claim 1 or 2, **characterized in that** the left-hand electrically conductive connection (9) is a first cable with a first plug (19) which can be inserted in a first socket (18) of the control device (8), that the right-hand electrically conductive connection (11) is a second cable with a second plug (21) which can be inserted in a second socket (20) of the control device (8), and that the first plug (19) differs from the second plug (21) and the first socket (18) differs from the second socket (20), such that the first plug (19) can only be inserted in the first socket (18) and the second plug (21) can only be inserted in the second socket (20).

4. Device according to one of the preceding claims, **characterized in that** the left-hand electrically conductive connection (9) and the left-hand electrically conductive glove (10) are provided with a hook-and-loop fastener (13), over which the left-hand electrically conductive connection (9) is connected to the left-hand electrically conductive glove (10), and that the right-hand electrically conductive connection (11) and the right-hand electrically conductive glove (12) are provided with a hook-and-loop fastener (14), over which the right-hand electrically conductive connection (11) is connected to the right-hand electrically conductive glove (12).

5. Device according to claim 1, **characterized in that** the control device (8) is designed to cycle the direct current to supply the left-hand and right-hand electrically conductive gloves (10, 12) with power at the same time.

6. Device according to one of the preceding claims, **characterized in that** the control device (8) is provided with a safety transformer.

7. Device according to one of the preceding claims, **characterized in that** the control device (8) is built redundantly.

8. Device according to one of the preceding claims, **characterized in that** the left-hand and right-hand electrically conductive glove (10, 12) are made of a synthetic fibre and have a coating made of conductive metal.

9. Device according to one of the preceding claims, **characterized in that** the control device (8) is provided with a visual display device (22) on which the operating condition and/or faults detected by the control device (8) are displayed.

10. Device according to one of the preceding claims, **characterized in that** it comprises shoes for the person, and that the shoes are provided with an electrical insulator at least on their sole.

11. Device according to one of the preceding claims, **characterized in that** it comprises a jacket for the person, and that the left-hand and right-hand electrically conductive connections are integrated at least in sections into the jacket.

12. Method for the safety instrumented control of a machine which is provided with an electric drive, which is operated by a person and which has at least one metal component capable of causing injury in the event of a mechanical interaction with said person, comprising the following method steps:
equipping the person with a left-hand and right-hand conductive glove (10, 12) which conduct the electric current and which are to be worn by the person such that the gloves make contact with the skin of the person's hands,
electrically conductive connection of the left-hand conductive glove (10) to a control device (8) which controls the electrical drive of the machine (1),
electrically conductive connecting of the right-hand conductive glove (12) to the control device (8),
detecting the resistance between the left-hand conductive glove (10) conductively connected to the control device (8) and the right-hand conductive glove (12) conductively connected to the control device (8),
equipping the person with a left-hand and right-hand insulating glove,
which comprises an electrical insulator, and which are to be worn by the person over the conductive gloves (10, 12) before activating the operating condition,
in the operating condition, supplying the electric drive with power by the control device (8) and monitoring the voltage between the right-hand conductive glove (12) and the left-hand conductive glove (10) and switching off the electric drive or reversing the direction of movement of the electric drive if the voltage changes between the right-hand conductive glove and the left-hand conductive glove (10, 12),
**characterized in**
**that** the detected resistance is compared with a predetermined minimum resistance and a predetermined maximum resistance, wherein the minimum resistance is greater than 0 Ω and less than the body resistance of a person,
**that** the operating condition is only activated if the detected resistance is greater than the minimum resistance or less than the maximum resistance,
**that** the control device (8) supplies the left-hand and right-hand conductive gloves with direct current via a voltage source (17) and that the direct current is cycled to alternately supply the left-hand and right-hand conductive gloves (10, 12) with direct current.

13. Method according to claim 12, **characterized in that** before activation of the operating condition of the electric drive a resistance test device (16) of the control device (8) must perform a glove test function
- wherein the resistance between the left-hand conductive glove (10) and a metallic part of the machine (1) is compared with a predetermined glove maximum resistance if the person is wearing the left-hand glove (10) and uses this gloved left hand to make contact with the metallic part,
- wherein the resistance between the right-hand conductive glove (12) and the metallic part of the machine (1) is compared with the predetermined glove maximum resistance if the person is wearing the right-hand glove (12) and uses this gloved right hand to make contact with the metallic part,
- and wherein the activation of the operating condition is prevented if the resistance of one or both gloves (10, 12) is greater than the glove maximum resistance.

14. Method according to claim 12 or 13, **characterized in that** in the operating condition, when the machine (1) is driven, the resistance between the left-hand conductive glove (10) and the right-hand conductive glove (12) is periodically compared with the predetermined minimum resistance and the predetermined maximum resistance, and that the operating condition is terminated if the resistance is less than the minimum resistance or greater than the maximum resistance.

15. Method according to claim 14, **characterized in that** upon terminating the operating condition the control device (8) interrupts the power supply of the electric drive.

16. Method according to claim 12, **characterized in that** the direct current is cycled to supply the left-hand and the right-hand electrically conductive glove (10, 12) with direct current at the same time.

17. Method according to one of claims 12 to 16, **characterized in that** the operating condition and/or faults detected by the control device (8) are displayed on a display device.

18. Flaying and skinning machine with a knife (2), a roller (4) and an electric drive for the roller (4), **characterized in that** it is provided with a device according to one of claims 1 to 11.

19. Membrane skinning machine with a blade (2), a roller (4) and an electric drive for the roller (4), **characterized in that** it is provided with a device according to one of claims 1 to 11.

20. Method for the safety instrumented control of a flaying and skinning machine, **characterized in that** the method steps are carried out according to one of claims 12 to 17.

21. Method for the safety instrumented control of a membrane skinning machine, **characterized in that** the method steps are carried out according to one of claims 12 to 17.

## Revendications

1. Dispositif pour la commande de sécurité technique d'une machine équipée d'un entraînement électrique, opérée par une personne et dotée d'au moins un composant en métal qui blesse cet opérateur en cas d'interaction mécanique,
avec des gants conducteurs gauche et droit (10, 12) conduisant le courant électrique et que la personne doit porter de manière à ce qu'ils soient en contact avec sa peau au niveau des mains,
avec des gants isolants gauche et droit (10, 12) constitués d'un isolant électrique et que la personne doit porter sur les gants conducteurs,
avec un dispositif de commande (8), qui pilote l'entraînement électrique de la machine (1),
avec une liaison électriquement conductrice gauche (9) entre le gant conducteur gauche (10) et le dispositif de commande (8),
avec une liaison électriquement conductrice droite (11) entre le gant conducteur droit (12) et le dispositif de commande (8),
le dispositif de commande (8) présentant un état de fonctionnement dans lequel il alimente l'entraînement électrique en courant et surveille la tension entre le gant conducteur droit (12) et le gant conducteur gauche (10), et dans lequel il arrête l'entraînement électrique ou inverse le sens du mouvement de l'entraînement électrique lorsque la chute de tension change via le gant conducteur gauche et/ou droit (10, 12),
**caractérisé en ce que**
le dispositif de commande (8) est équipé d'un dispositif de contrôle de la résistance (16), qui mesure la résistance entre le gant conducteur gauche (10), relié de façon conductrice au dispositif de commande (8), et le gant conducteur droit (12), relié de façon conductrice au dispositif de commande (8), et la compare à une résistance minimale prédéfinie et une résistance maximale prédéfinie, la résistance minimale étant supérieure à 0 Ω et inférieure à la résistance corporelle d'une personne, et qui empêche l'activation de l'état de fonctionnement ou l'arrête s'il est établi lorsque la résistance relevée est inférieure à la résistance minimale ou supérieure à la résistance maximale,
le dispositif de commande (8) est doté d'une source de tension (17), qui alimente les gants électriquement conducteurs gauche et droit (10, 12) en courant continu,
et le dispositif de commande (8) est conçu pour cadencer le courant continu de telle sorte que les gants électriquement conducteurs gauche et droit (10, 12) sont alimentés de façon alternée en courant.

2. Dispositif selon la revendication 1, **caractérisé en ce que** le dispositif de contrôle de la résistance (16) du système de commande (8) présente une fonction de contrôle des gants
- avec laquelle la résistance entre le gant conducteur gauche (10) et une pièce métallique de la machine (1) est comparée avec une résistance maximale prédéfinie du gant lorsque la personne porte le gant gauche et touche la pièce métallique avec la main gauche dotée de ce gant,
- avec laquelle la résistance entre le gant conducteur droit (12) et la pièce métallique de la machine (1) est comparée avec une résistance maximale prédéfinie du gant lorsque la personne porte le gant droit et touche la pièce métallique avec la main droite dotée de ce gant,
- avec laquelle l'activation de l'état de fonctionnement est empêchée si la résistance est supérieure sur l'un ou les deux gants (10, 12) à la résistance maximale du gant.

3. Dispositif selon la revendication 1 ou 2, **caractérisé en ce que** la liaison électriquement conductrice gauche (9) est un premier câble avec une première fiche (19), enfichable dans une première prise (18) du dispositif de commande (8), et **en ce que** la liaison électriquement conductrice droite (11) est un deuxième câble avec une deuxième fiche (21), enfichable dans une deuxième prise (20) du dispositif de commande (8), et **en ce que** la première fiche (19) diffère de la deuxième fiche (21) et la première prise (18) diffère de la deuxième prise (20) de telle sorte que la première fiche (19) peut seulement être enfichée dans la première prise (18) et la deuxième fiche (21) seulement dans la deuxième prise (20).

4. Dispositif selon l'une des revendications précédentes, **caractérisé en ce que** la liaison électriquement conductrice gauche (9) et le gant électriquement conducteur gauche (10) sont dotés d'une fermeture autoagrippante (13), qui raccorde la liaison électriquement conductrice gauche (9) au gant électriquement conducteur gauche (10) et **en ce que** la liaison électriquement conductrice droite (11) et le gant électriquement conducteur droit (12) sont dotés d'une fermeture autoagrippante (14), qui raccorde la liaison électriquement conductrice droite (11) au gant électriquement conducteur droit (12).

5. Dispositif selon la revendication 1, **caractérisé en ce que** le dispositif de commande (8) est conçu pour cadencer le courant continu de telle sorte que les gants électriquement conducteurs gauche et droit (10, 12) sont alimentés en courant en même temps.

6. Dispositif selon l'une des revendications précédentes, **caractérisé en ce que** le dispositif de commande (8) est équipé d'un transformateur de sécurité.

7. Dispositif selon l'une des revendications précédentes, **caractérisé en ce que** le dispositif de commande (8) présente une structure redondante.

8. Dispositif selon l'une des revendications précédentes, **caractérisé en ce que** les gants électriquement conducteurs gauche et droit (10, 12) sont constitués d'une fibre synthétique et pourvus d'un revêtement formé d'un métal conducteur.

9. Dispositif selon l'une des revendications précédentes, **caractérisé en ce que** le dispositif de commande (8) est doté d'un dispositif d'affichage optique (22), qui indique l'état de fonctionnement et/ou les erreurs relevées par le dispositif de commande (8).

10. Dispositif selon l'une des revendications précédentes, **caractérisé en ce qu'**il comprend des chaussures pour la personne et que ces chaussures sont au moins dotées au niveau de leur semelle d'un isolant électrique.

11. Dispositif selon l'une des revendications précédentes, **caractérisé en ce qu'**il comprend une veste pour la personne et **en ce qu'**au moins certaines sections des liaisons électriquement conductrices gauche et droite sont intégrées dans la veste.

12. Procédé pour la commande de sécurité technique d'une machine équipée d'un entraînement électrique, opérée par une personne et dotée d'au moins un composant en métal qui, en cas d'interaction mécanique, blesse la personne, **caractérisé par** les opérations suivantes:
Équipement de la personne avec des gants conducteurs gauche et droit (10, 12), conduisant le courant électrique et que la personne doit porter de telle façon qu'ils touchent sa peau au niveau des mains,
liaison électriquement conductrice du gant conducteur gauche (10) et du dispositif de commande (8), qui pilote l'entraînement électrique de la machine (1),
liaison électriquement conductrice du gant conducteur droit (12) et du dispositif de commande (8),
mesure de la résistance entre le gant conducteur gauche (10), relié de façon conductrice au dispositif de commande (8), et le gant conducteur droit (12), relié de façon conductrice au dispositif de commande (8), équipement de la personne d'un gant gauche et d'un gant droit isolants, constitués d'un isolant électrique et que la personne doit porter sur les gants conducteurs (10, 12) avant l'activation de l'état de fonctionnement, dans l'état de fonctionnement, alimentation de l'entraînement électrique en courant par le dispositif de commande (8) et surveillance de la tension entre le gant conducteur droit (12) et le gant conducteur gauche (10) et arrêt de l'entraînement électrique ou inversion du sens du mouvement de l'entraînement électrique en cas de chute de tension entre le gant conducteur droit et le gant conducteur gauche (10, 12),
**caractérisé en ce que**
la résistance relevée est comparée avec une résistance minimale prédéfinie et une résistance maximale prédéfinie, la résistance minimale étant supérieure à 0 Ω et inférieure à la résistance corporelle d'une personne,
l'état de fonctionnement est seulement activé lorsque la résistance relevée est supérieure à la résistance minimale ou inférieure à la résistance maximale,
le dispositif de commande (8) alimente par le biais d'une source de tension (17) les gants électriquement conducteurs gauche et droit en courant continu et **en ce que** le courant continu est cadencé de telle sorte que les gants électriquement conducteurs gauche et droit (10, 12) sont alimentés de façon alternée en courant continu.

13. Procédé selon la revendication 12, **caractérisé en ce que**, avant l'activation de l'état de fonctionnement de l'entraînement électrique, un dispositif de contrôle de la résistance (16) du dispositif de commande (8) vérifie les gants au moyen d'une fonction de contrôle
- avec laquelle la résistance entre le gant électriquement conducteur gauche (10) et une pièce métallique de la machine (1) est comparée avec une résistance maximale prédéfinie du gant lorsque la personne porte le gant gauche (10) et touche la pièce métallique avec la main gauche dotée de ce gant,
- avec laquelle la résistance entre le gant électriquement conducteur droit (12) et la pièce métallique de la machine (1) est comparée avec une résistance maximale prédéfinie du gant lorsque la personne porte le gant droit (12) et touche la pièce métallique avec la main droite dotée de ce gant,
- avec laquelle l'activation de l'état de fonctionnement est empêchée si la résistance est supérieure sur l'un ou les deux gants (10, 12) à la résistance maximale du gant.

14. Procédé selon la revendication 12 ou 13, **caractérisé en ce que**, dans l'état de fonctionnement, lorsque l'entraînement de la machine (1) est en marche, la résistance entre le gant conducteur gauche (10) et le gant conducteur droit (12) est périodiquement comparée avec la résistance minimale prédéfinie et la résistance maximale prédéfinie et **en ce que** l'état de fonctionnement est arrêté lorsque la résistance est inférieure à la résistance minimale ou supérieure à la résistance maximale.

15. Procédé selon la revendication 14, **caractérisé en ce que**, à l'arrêt de l'état de fonctionnement, le dispositif de commande (8) interrompt l'alimentation en courant de l'entraînement électrique.

16. Procédé selon la revendication 12, **caractérisé en ce que** le courant continu est cadencé de telle façon qu'il alimente simultanément les gants électriquement conducteurs gauche et droit (10, 12).

17. Procédé selon l'une des revendications 12 à 16, **caractérisé en ce que** l'état de fonctionnement et/ou les erreurs relevées par le dispositif de commande (8) sont indiqués sur un dispositif d'affichage.

18. Dépouilleuse et découenneuse équipée d'un couteau (2), d'un rouleau (4) et d'un entraînement électrique pour le rouleau (4) **caractérisée en ce qu'**elle est munie d'un dispositif selon l'une des revendications 1 à 11.

19. Éplucheuse dotée d'un couteau (2), d'un rouleau (4) et d'un entraînement électrique pour le rouleau (4) **caractérisée en ce qu'**elle est munie d'un dispositif selon l'une des revendications 1 à 11.

20. Procédé pour la commande de sécurité technique d'une dépouilleuse et découenneuse **caractérisé en ce que** les opérations sont effectuées selon l'une des revendications 12 à 17.

21. Procédé pour la commande de sécurité technique d'une éplucheuse **caractérisé en ce que** les opérations sont effectuées selon l'une des revendications 12 à 17.
